# EUROPÄISCHE PATENTSCHRIFT

(11) **EP 0 736 736 B1**
(45) Veröffentlichungstag und Bekanntmachung des Hinweises auf die Patenterteilung: **09.08.2000**
(21) Anmeldenummer: 96104853.5
(22) Anmeldetag: 27.03.1996
(51) Int. Cl.: F24J 2/04, E04B 1/76

(54) **Aussenwandaufbau an Gebäuden, insbesondere Paneel einer Gebäudewand**
Outer wall construction for a building, more particularly wall panel for a building
Construction d'un mur extérieur de bâtiment, en particulier panneau pour un mur de bâtiment

(30) Priorität: 08.04.1995 DE 19513372
(43) Veröffentlichungstag der Anmeldung: 09.10.1996
(73) Patentinhaber: NORSK HYDRO ASA, 0257 Oslo 2 (NO)
(72) Erfinder: Schulz, Harald, Dr., 86381 Krumbach (DE)
(74) Vertreter: Dziewior, Joachim

(56) Entgegenhaltungen:
- EP-A- 0 243 912
- DE-A- 4 241 460
- DE-A- 4 418 214
- FR-A- 2 657 419
- US-A- 4 846 151
- FAIREY: "radiant barriers" SOLAR AGE. INCLUDING: PROGRESSIVE BUILDER., Bd. 9, Nr. 7, Juli 1984, US, Seiten 34-39, XP002042300

## Beschreibung

Die Erfindung betrifft einen Außenwandaufbau an Gebäuden, insbesondere Paneel einer Gebäudewand, wobei zur Nutzung von Solarenergie zwischen einer innenseitigen Wandschale und einer für Solarstrahlung durchlässigen außenseitigen Wandschale eine an letztere angrenzende, ebenfalls für Solarstrahlung durchlässige äußere Wärmedämmschicht angeordnet und eine Solarstrahlung absorbierende Grenzfläche vorgesehen ist.

Ein derartiger Wandaufbau ist beispielsweise aus GB 2 054 004 bekannt. Die außenseitige Wandschale ist dabei von einer Verglasung gebildet, während die innenseitige Wandschale eine optische Strahlung absorbierende Schicht trägt. Zwischen der innen- und außenseitigen Wandschale ist eine Wärmedämmschicht in Form eines Spaltes vorhanden.

Der Erfindung liegt die Aufgabe zugrunde, einen Außenwandaufbau der eingangs genannten Art so weiter auszubilden, daß die Temperatur im Innenraum sowohl im Sommer bei starker Sonneneinstrahlung als auch im Winter während der Nacht von Personen im Innenraum noch als behaglich empfunden wird.

Diese Aufgabe wird nach der Erfindung bei einem Wandaufbau, insbes. Paneel mit den eingangs genannten Merkmalen dadurch gelöst, daß die Absorberschicht durch eine zur innenseitigen Wandschale gehörenden inneren Wärmedämmschicht getrennt ist, und daß die innenseitige Wandschale auf der Innenraumseite durch eine im Bereich langwelliger Infrarotstrahlung niedrigemittierende, hochreflektierende Wärmeschutzschicht oder -beschichtung abgedeckt ist.

Durch die Erfindung ergeben sich die Vorteile einer erhöhten Wärmedämmung im Winter durch erhöhten inneren Wärmeübergangswiderstand und eines verminderten Überhitzungsrisikos im Sommer durch schlecht emittierende Oberfläche.

In bevorzugten Ausführungsformen kann die Wärmeschutzschicht oder -beschichtung durch eine Lackschicht aus insbes. Aluminium-Metallic-Lack oder Glimmerlack oder durch eine Folie aus Aluminium oder bedampftem Kunststoff gebildet sein, wobei im Fall der Folie diese auf die innenseitige Wandschale aufgeklebt, mechanisch aufgespannt oder in anderer Weise an der Innenraumseite der innenseitigen Wandschale befestigt sein kann. Nach einem anderen vorteilhaften Vorschlag der Erfindung ist die Wärmeschutzschicht durch eine Wärmeschutzglasscheibe mit L-E-Beschichtung gebildet.

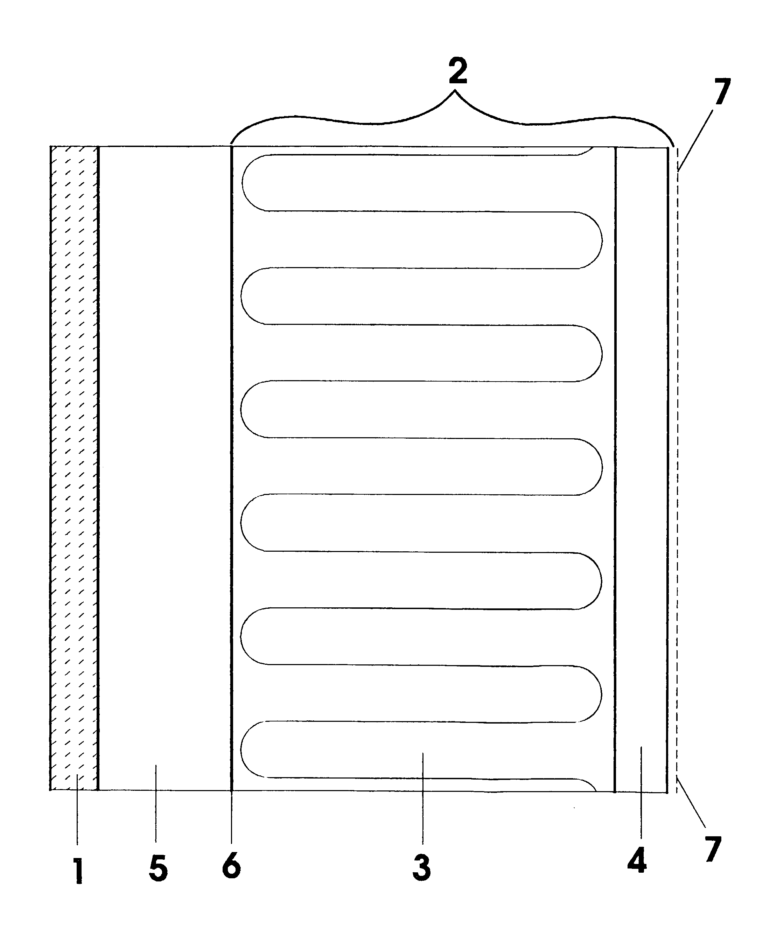

Im folgenden wird die Erfindung anhand einer Zeichnung näher erläutert; wobei die einzige Figur der Zeichnung in schematischer Darstellung einen Querschnitt durch einen Wandaufbau nach der Erfindung zeigt.

In der Zeichnung ist die außenseitige transparente Wandschale mit 1 bezeichnet. Sie kann als Einfach-, Zweifach- oder Dreifachglasscheibe ausgebildet sein, wobei im übrigen Wärmeschutzbeschichtungen an den Scheiben vorhanden sein können, die aber hier im einzelnen nicht weiter beschrieben zu werden brauchen. Zu dem in der Zeichnung auf der rechten Seite liegenden Innenraum hin besitzt der Wandaufbau eine innenseitige Wandschale 2, zu der eine innere Wärmedämmschicht 3 gehört, die auf der Innenraumseite durch eine dampfdichte Wandschicht 4 abgeschlossen ist. An die außenseitige Wandschale 1 schließt sich in Richtung zum Innenraum hin eine äußere Wärmedämmschicht 5 an, die wie die außenseitige Wandschale 1 ebenfalls für die Solarstrahlung durchlässig ist und zumeist von einer Luftschicht gebildet ist. Diese äußere transparente Wärmedämmschicht 5 ist von der inneren Wärmedämmschicht 3 durch eine Grenzfläche oder -schicht 6 getrennt, an der Solarstrahlung aus der äußeren Wärmedämmschicht 5 absorbiert wird. Die innenseitige Wandschale 2, im Ausführungsbeispiel also die Wandschicht 4, ist auf der Innenraumseite durch eine in der Zeichnung gestrichelt angedeutete Beschichtung 7 abgedeckt, die im Bereich langwelliger Infrarotstrahlung besonders niedrig emittiert und entsprechend hoch reflektiert wird und üblicherweise unter der Bezeichnung L-E (Low Emissivity)-Oberfläche bekannt ist. Diese Wärmeschutzschicht oder -beschichtung 7 kann aus einer Lackschicht aus insbesondere Aluminium-Metallic-Lack oder Glimmerlack mit Pigment bestehen. Sie kann auch aus einer Aluminiumfolie oder bedampften Kunststoffolie gebildet sein, die auf der Innenraumseite der innenseitigen Wandschale aufgeklebt, aufgespannt oder in anderer geeigneter Weise befestigt ist. Weiter besteht die Möglichkeit, die Wärmeschutzschicht 7 durch Wärmeschutzglasscheiben mit L-E-Beschichtung zu bilden, die in geeigneter Weise an der innenseitigen Wandschale 4 zu befestigen sind, was auf vielfache Weise möglich ist, so daß hier auf die Beschreibung einer speziellen Befestigungsweise verzichtet werden kann.

## Patentansprüche

1. Außenwandaufbau an Gebäuden, insbesondere Paneel einer Gebäudewand, wobei zur Nutzung von Solarenergie zwischen einer innenseitigen Wandschale (2) und einer für Solarstrahlung durchlässigen außenseitigen Wandschale (1) eine an letztere angrenzende, ebenfalls für Solarstrahlung durchlässige äußere Wärmedämmschicht (5) angeordnet und eine Solarstrahlung absorbierende Grenzfläche (6) vorgesehen ist, dadurch gekennzeichnet daß, daß die Absorberschicht durch eine zur innenseitigen Wandschale (2) gehörenden inneren Wärmedämmschicht (3) getrennt ist, und daß die innenseitige Wandschale (2) auf der Innenraumseite durch eine im Bereich langwelliger Infrarotstrahlung niedrigemittierende, hochreflektierende Wärmeschutzschicht oder -beschichtung (7) abgedeckt ist.

2. Außenwandaufbau nach Anspruch 1, dadurch gekennzeichnet, daß die Wärmeschutzschicht oder -beschichtung (7) durch eine Lackschicht aus insbesondere Aluminium-Metallic-Lack oder Glimmerlack gebildet ist.

3. Außenwandaufbau nach Anspruch 1, dadurch gekennzeichnet, daß die Wärmeschutzschicht oder -beschichtung (7) durch eine Aluminiumfolie gebildet ist.

4. Außenwandaufbau nach Anspruch 1, dadurch gekennzeichnet, daß die Wärmeschutzschicht oder -beschichtung (7) durch eine bedampfte Kunststoffolie gebildet ist.

5. Außenwandaufbau nach Anspruch 1, dadurch gekennzeichnet, daß die Wärmeschutzschicht (7) durch eine Wärmeschutzglasscheibe mit L-E-Beschichtung gebildet ist.

## Claims

1. An external wall structure on buildings, in particular a panel of a building wall, wherein to use solar energy provided between an inward wall shell (2) and an outward wall shell (1) which is transparent for solar radiation is an outer heat-insulating layer (5) which adjoins the wall shell (1) and which is also transparent for solar radiation, and a solar radiation-absorbent interface (6), characterised in that the absorber layer is separated by an inner heat-insulating layer (3) which belongs to the inward wall shell (2), and that the inward wall shell (2) is covered on the interior space side by a heat-protection layer or coating (7) which is highly reflecting and low-emitting in the range of long-wave infra-red radiation.

2. An external wall structure according to claim 1 characterised in that the heat-protection layer or coating (7) is formed by a lacquer layer of in particular aluminium metallic lacquer or mica lacquer.

3. An external wall structure according to claim 1 characterised in that the heat-protection layer or coating (7) is formed by an aluminium foil.

4. An external wall structure according to claim 1 characterised in that the heat-protection layer or coating (7) is formed by a vapour-deposited plastic foil.

5. An external wall structure according to claim 1 characterised in that the heat-protection layer (7) is formed by a heat-protection glass pane with an L-E-coating.

## Revendications

1. Système de mur extérieur pour bâtiments, en particulier panneau pour un mur de bâtiment, avec pour utiliser l'énergie solaire, entre un parement (2) intérieur et un parement (1) extérieur perméable au rayonnement solaire, une couche thermiquement isolante (5) extérieure, également perméable au rayonnement solaire, contiguë audit parement extérieur, et avec une interface (6) absorbant le rayonnement solaire, caractérisé par le fait que la couche absorbante est séparée par une couche thermiquement isolante (3) faisant partie du parement (2) intérieur et par le fait que le parement (2) intérieur, côté intérieur du bâtiment, est couvert d'une couche ou d'un revêtement calorifuge (7) à faible pouvoir émissif, à pouvoir réfléchissant élevé dans le domaine infrarouge de grande longueur d'onde.

2. Système de mur extérieur selon la revendication 1, caractérisé par le fait que la couche ou le revêtement calorifuge (7) est formé d'une couche de peinture, en particulier de peinture métallisée à base d'aluminium ou d'une peinture à base de mica.

3. Système de mur extérieur selon la revendication 1, caractérisé par le fait que la couche ou le revêtement calorifuge (7) est formé d'une feuille d'aluminium.

4. Système de mur extérieur selon la revendication 1, caractérisé par le fait que la couche ou le revêtement calorifuge (7) est formé d'un film de matière plastique métallisé sous vide.

5. Système de mur extérieur selon la revendication 1, caractérisé par le fait que la couche calorifuge (7) est formée d'une feuille de verre calorifugé, pourvue d'un revêtement à faible pouvoir émissif.
